**Europäisches Patentamt**

**European Patent Office**

**Office européen des brevets**

(19)

(11) Veröffentlichungsnummer: **0 001 052**
**B1**

(12) **EUROPÄISCHE PATENTSCHRIFT**

(45) Veröffentlichungstag der Patentschrift: **04.11.81**

(51) Int. Cl.³: **B 60 R 1/06**

(21) Anmeldenummer: **78100624.2**

(22) Anmeldetag: **08.08.78**

(54) Fernbedienbare Ein- oder Verstellvorrichtung bei Rückblickspiegeln.

(30) Priorität: **14.09.77 DE 2741290**

(43) Veröffentlichungstag der Anmeldung:
**21.03.79 Patentblatt 79/6**

(45) Bekanntmachung des Hinweises auf die Patenterteilung:
**04.11.81 Patentblatt 81/44**

(84) Benannte Vertragsstaaten:
**BE DE FR GB NL**

(56) Entgegenhaltungen:
**DE - A - 2 637 475**
**DE - A - 2 644 578**
**FR - A - 2 326 312**
**FR - A - 1 509 922**
**FR - E - 91 767**
**GB - A - 1 510 754**
**US - A - 2 906 292**
**US - A - 3 788 734**
**US - A - 4 050 776**

(73) Patentinhaber: **Wunsch, Erich**
**Im Hofrain 12**
**D-7141 Schwieberdingen (DE)**

(72) Erfinder: **Wunsch, Erich**
**Im Hofrain 12**
**D-7141 Schwieberdingen (DE)**
Erfinder: **Wunsch, Udo**
**Im Hofrain 12**
**D-7141 Schwieberdingen (DE)**
Erfinder: **Wunsch, Eckart**
**Im Hofrain 12**
**D-7141 Schwieberdingen (DE)**

(74) Vertreter: **Quarder, Heinrich**
**Richard-Wagner-Strasse 16**
**D-7000 Stuttgart 1 (DE)**

Courier Press, Leamington Spa, England.

# 0 001 052

### Fernbedienbare Ein- oder Verstellvorrichtung bei Rückblickspiegeln

Die Erfindung betrifft eine fernbedienbare Ein- oder Verstellvorrichtung bei Rückblickspiegeln von Fahrzeugen od. dgl., mit mindestens einer in einem Spiegelgehäuse untergebrachten, von einer entfernten Stelle aus steuerbaren Stellvorrichtung, einer schwenkbaren, mittels Aufhängungen spielfrei in dem Spiegelgehäuse gelagerten Spiegelplatte, wobei eine der an der Spiegelplattenrückseite angreifenden Aufhängungen ortsfest und mit dem Spiegelgehäuse starr verbunden ist, während die weitere oder weiteren Aufhängungen der Spiegelplatte als Übertragungselemente der Stellvorrichtung und gegenüber dem Spiegelgehäuse bewegbar ausgebildet sind.

Fernbedienbare Rückblickspiegel an Kraftfahrzeugen, die vom Platz des Fahrers aus so eingestellt werden können, daß das rückwärtige Verkehrsgeschehen von dem Fahrer erfaßt werden kann, sind bekannt.

So ist in der französischen Patentschrift 2 326 312 eine fernbedienbare Ein- oder Verstellvorrichtung für Rückblickspiegel von Kraftfahrzeugen bekannt, bei der in einem Spiegelgehäuse mindestens eine von einer entfernten Stelle aus steuerbare Stellvorrichtung untergebracht ist und in der eine Spiegelplatte mittels Aufhängungen spielfrei gelagert ist, indem eine, an der Spiegelplattenrückseite angreifende Aufhängung ortsfest und mit dem Spiegelgehäuse starr verbunden ist, während die weiteren Aufhängungen der Spiegelplatte als Übertragungselemente der Stellvorrichtung und gegenüber dem Spiegelgehäuse bewegbar ausgebildet sind.

Eine derartige Aufhängung einer Spiegelplatte in einem Spiegelgehäuse hat den Nachteil, daß konstruktiv und materialmäßig sowohl in den Übertragungselementen als auch in deren Lagerung nicht zu umgehende Elastizität im Fahrbetrieb zu unerwünschten und die Fahrsicherheit beeinträchtigenden Schwingungen der Spiegelplatte führt.

Maßnahmen, wie sie in dem US—A—3 788 734 in Form von Verstrebungen der Stellvorrichtungen getroffen werden, sind grundsätzlich nicht geeignet, diesem Mißstand abzuhelfen, weil die zur Befestigung der Spiegelplatte in dem Spiegelgehäuse verwendeten Befestigungselemente zu große Hebelarme bilden, um die Spiegelplatte erschütterungsfrei lagern zu können.

Auch bei Einsatz massiverer und kürzerer Übertragungselemente, wie sie bei der deutschen Offenlegungsschrift 2 644 578 offenbart sind, kann auf Dauer, wie die Praxis gezeigt hat, eine ausreichend starre Aufhängung der Spiegelplatte in dem Spiegelgehäuse so, daß diese schwingungsfrei bleibt, nicht erreicht werden.

Es ist daher Aufgabe vorliegender Erfindung, eine Rückblickspiegel mit einer Ein- oder Verstellvorrichtung der eingangs genannten Art vorzuschlagen, bei der die Spiegelplatte in dem Spiegelgehäuse so aufgehängt und gelagert ist, daß sie unter allen vorkommenden Betriebsbedingungen frei von Schwingungen und Vibrationen bleibt.

Die Aufgabe wird bei einem Rückblickspiegel der zur Rede stehenden Art dadurch gelöst, daß die gegenüber dem Spiegelgehäuse bewegbaren, an der Spiegelplatte angreifenden Aufhängungen, in dem Spiegelgehäuse derart unter Reibung zwangsgeführt sind, daß eine quasistarre Verbindung zwischen dem Spiegelgehäuse und der Spiegelplatte gegeben ist.

In Weiterbildung der Erfindung ist vorgesehen, daß die Zwangsführung in unmittelbarer Nähe der Spiegelplatte an der zugehörigen Aufhängung angreift.

In vorteilhafter Ausgestaltung der Erfindung ist die durch die Zwangsführung auf die Aufhängung der Spiegelplatte wirkende Reibungskraft so ausgelegt, daß die im Fahrbetrieb auf die Spiegelplatte und ihre Aufhängung einwirkenden Beschleunigungskräfte diese Reibungskraft nicht überwinden können, so daß eine quasistarre Verbindung der Spiegelplatte mit dem Spiegelgehäuse besteht, die nur kurzzeitig während der Ein- oder Verstellung der Spiegelplatte durch die Stellvorrichtung aufgehoben wird.

Durch diese Maßnahmen wird erreicht, daß eine Elastizität in den Übertragungselementen oder in den Stellvorrichtungen vorhandenes Spiel sich nicht nachteilig im Sinne einer vibrationsfreien Aufhängung der Spiegelplatte in dem Spiegelgehäuse auswirken können.

Die Erfindung wird nachstehend anhand zweier Ausführungsbeispiele in Verbindung mit den zugehörigen Zeichnungen näher beschrieben.

Von den Zeichnungen zeigt:

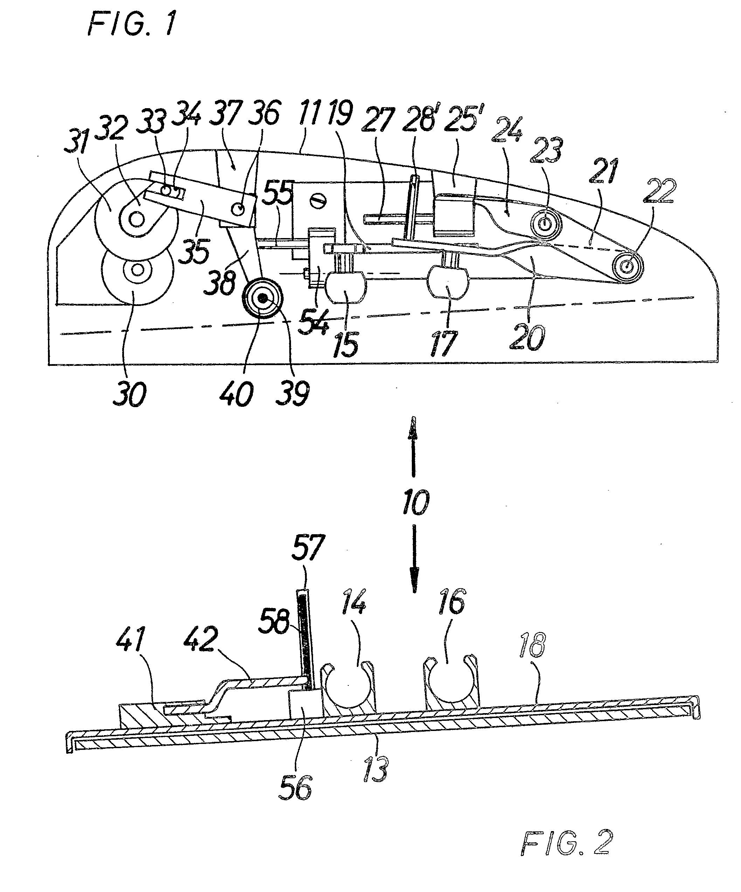

Figur 1 die schematische Darstellung eines ersten Ausführungsbeispiels eines Rückblickspiegels in Draufsicht,

Figur 2 eine entsprechende Ansicht der Spiegelplatte in horizontalem Schnitt,

Figur 3 eine schematische Darstellung der Rückansicht des Rückblickspiegels von Fig. 1 bei abgenommener Spiegelplatte,

Figur 4 eine. Ansicht der Rückseite der zugehörigen Spiegelplatte,

Figur 5 die Rückansicht eines zweiten Ausführungsbeispiels eines Außenrückblickspiegels bei abgenommener Spiegelplatte,

Figur 6 eine Draufsicht auf den Rückblickspiegel von Fig. 5,

Figur 7 die zu dem Rückblickspiegel von Fig. 6 gehörende Spiegelplatte im Schnitt,

Figur 8 eine Seitenansicht des in Fig. 5 dargestellten Rückblickspiegels, und

Figur 9 eine Ansicht der zugehörigen Spiegelplatte im Schnitt.

Bei dem ersten Ausführungsbeispiel besteht der allgemein mit 10 bezeichnete Rückblickspiegel aus einem Gehäuse 11, das mit einem Befestigungsfuß 12 versehen ist, über den der Rückblickspiegel an dem Fahrzeug befestigt werden kann.

Das Spiegelglas 13 wird von einem Spiegelglasträger 18 aufgenommen, der mittels zweier Kugelgelenke 14, 15 und 16, 17 in dem Spiegelgehäuse schwenkbeweglich aufgehängt ist, wozu die jeweiligen Mutterteile 14 bzw. 16 der Kugelgelenke an der Rückseite der Spiegelträgerplatte 18 befestigt sind — wenn die Spiegelträgerplatte aus Kunststoff besteht, können die Mutterteile auch angespritzt sein — während das als Gegenstück spiegelgehäuseseitig angeordnete Vaterteil 15 über einen Träger 19 starr mit dem Spiegelgehäuse 11 verbunden ist. Bei dem zweiten Kugelgelenk 16, 17 ist das Vaterteil 17 nicht starr mit dem Spiegelgehäuse 11 verbunden, sondern an einem Arm 20 befestigt, der über ein Drehgelenk 22 an einem Ausleger 21 in horizontaler Ebene drehbar gelagert ist. Der Ausleger 21 ist dan seinerseits über ein Drehgelenk 23 so an einem mit einem Sockel 25' des Spiegelgehäuses 11 verbundenen Tragarm 24 angelenkt, daß das zweite Kugelgelenk 16, 17 zusammen mit dem Arm 20 und dem Ausleger 21 in einer im wesentlichen horizontalen, durch den Mittelpunkt des ersten Kugelgelenks 14, 15 verlaufenden Ebene bewegbar ist.

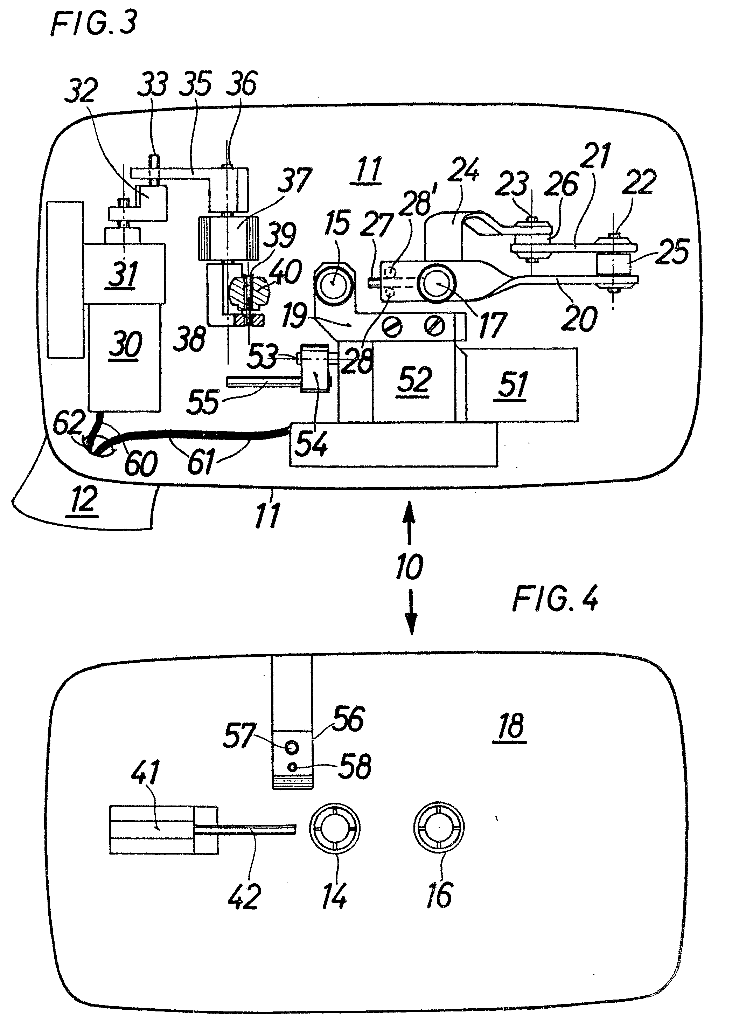

Die beiden Drehgelenke 22 und 23 können mit Reibungsdämpfern 25 bzw. 26 (vgl. Fig. 3) versehen sein, die durch Federscheiben unter axialer Spannung gehalten werden, um zu einer erschütterungsfreien Lagerung der Spiegelplatte beizutragen.

Eine weitere Führung des Kugelgelenks 16, 17 in horizontaler Ebene wird durch einen über den Sockel 25' starr mit dem Spiegelgehäuse 11 verbundenen Führungsstift 27 erreicht, der von zwei an dem Arm 20 parallel zu der Schwenkebene des Gelenks 16, 17 befestigte Stifte 28 bzw. 28' so umfaßt wird, daß ein ständiger Kontakt der Stifte 28, 28' mit dem Führungsstift 27 gegeben ist. Zu diesem Zweck ist der an dem Arm 20 befestigte Stift 28' als Federstift ausgebildet.

Der durch das zweite Kugelgelenk 16, 17 gebildete zweite Aufhängepunkt für die Spiegelplatte 18 ist über die Gelenke 22 und 23 sowie den Arm 20 und den Ausleger 21 derart mit dem Spiegelgehäuse verbunden, daß er in Verbindung mit dem durch das Kugelgelenk 14, 15 gebildeten ersten Aufhängepunkt eine in der horizontalen Schwenkebene liegende Kreisbahn um das mit dem Spiegelgehäuse 11 starr verbundene Kugelgelenk beschreiben kann.

Die in dem Spiegelgehäuse untergebrachte Stellvorrichtung für die Spiegelplatte besteht aus einer ersten elektrischen Antriebseinheit 30, die die Verschwenkung der Tragplatte 18 mit dem Spiegel 13 um eine vertikale Achse besorgt. Hierzu wird die Drehbewegung des Elektromotors 30 über ein Untersetzungsgetriebe 31 auf eine Kurbel 32 übertragen, die mit einem Zapfen 33 in eine Schiebekulisse 34 eines Schwenkhebels 35 eingreift, der seinerseits über eine vertikale Achse 36 an einem spiegelgehäusefesten Bock 37 schwenkbar gelagert ist. Die Schwenkbewegung des Hebels 35 wird über die Achse 36 auf einen weiteren Schwenkhebel 38 übertragen, der an seinem freien Ende auf einer Vertikalen Achse 39 eine drehbar gelagerte Kugel 40 aufweist. Zur Übertragung der Bewegung der Stellvorrichtung auf die Spiegelplatte 18 greift die Kugel 40 hinter einen mittels eines Sockels 41 an der Rückseite der Tragplatte 16 befestigten Federstifts 42, der mit seinem freien Ende sich in der Verbindungslinie der Kugelgelenke 14, 15; 16, 17 parallel zu der Rückseite der Trägerplatte 1 und in Abstand zu dieser erstreckt. Durch diesen Federstift 42 wird die Kugel 40 in federnder Anlage an der Rückseite der Spiegelplatte 18 gehalten, so daß sich eine Schwenkbewegung des Hebels 38 als Kippbewegung um die starre Aufhängung 14, 15 in der durch den Mittelpunkt dieser Aufhängung gehenden Vertikalachse auf die Trägerplatte 18 und damit auf den Spiegel 13 übertragt.

Anstelle des Federstiftes 42 kann auch ein (nicht dargestellter) winkelschenkel an der Tragplatte 18 so angebracht sein, daß eine nach unten offene, in der Verschwenkebene des zweiten Kugelgelenks 16, 17 liegende Führungsbahn mit zwei parallelel Führungsflächen entsteht, die einen Abstand entsprechend dem Durchmesser der zwischen ihnen laufenden Kugel 40 aufweisen. Die eine Führungsfläche bildet dabei vorzugsweise die Rückseite der Tragplatte 18, während die andere Führungsfläche von dem freien Winkelschenkel gebildet wird.

Bei der Betätigung der Stellvorrichtung schwenkt das die zweite Aufhängung bildende Kugelgelenk 16, 17 auf einer Kreisbahn um den durch das fest mit dem Spiegelgehäuse 11 verbundene erste Kugelgelenk 14, 15 gegebenen ortsfesten Aufhängepunkt, wobei die Seitenverschiebung des Arms 20 durch den Ausleger 21 ausgeglichen wird.

Bei einer modifizierten Ausgestaltung dieser Spiegelaufhängung, bei der ein zweiter beweglicher Aufhängepunkt für die Spiegelplatte vorgesehen ist, ist dieser an einer Zylinder-Kolbenanordnung befestigt, wobei der spiegelseitige Angriffspunkt der Zylinder-Kolbenanordnung sich in seitlicher Versetzung zu dem spiegelgehäuseseitigen Angriffspunkt befindet. Der vorzugsweise aus Metall bestehende Kolben ist als Stift ausgebildet, der von dem aus Kunststoff bestehenden Zylinder unter Spannung aufgenommen und mit einer solchen Reibung geführt wird, daß von dem Spiegelglas und der Spiegelträgerplatte aufgrund von auf diese einwirkenden Beschleunigungen ausgehende Kräfte, die Reibung des Kolbens in dem Zylinder nicht überwinden können, eine Verschiebung des Kolbens in dem Zylinder bei Ein- der Verstellung der Spiegelplatte jedoch möglich ist.

Gemäß einer anderen Ausgestaltung der Erfindung kann die Lagerung des zweiten, ggf. auch weiterer Aufhängepunkte, mittels eines Schiebependelgelenks erfolgen, das es dem Aufhängungs-

3

punkt 17 erlaubt, seinen Abstand zu der Spiegelgehäuserückseite zu verändern und gleichzeitig in einer horizontalen Ebene eine Schwenkbewegung auszuführen.

Eine zweite Stellvorrichtung mit horizontal liegender Stellachse ist im unteren Teil des Spiegelgehäuses untergebracht. Sie besteht aus einem Elektromotor 51 mit einem nachgeschalteten Übersetzungsgetriebe 52, durch das die Drehbewegung über die Achse 53 auf eine mit dieser Achse drehfest verbundene Kurbel 54 übertragen wird. Diese Kurbel trägt an ihrem freien Ende einen Kurbelzapfen 55, der sich in Richtung der Achse 53 erstreckt. Der Zapfen 55 greift zwischen zwei an der Rückseite der Spiegelträgerplatte 18 senkrecht zu dieser in einem Sockel 56 befestigte Mitnehmerstifte, von denen der eine 57 einen stärkeren Durchmesser aufweist als der andere, der als Federstift 58 ausgebildet ist.

Der Abstand beider Stifte, die sich parallel zueinander erstrecken, entspricht dem Durchmesser des Zapfens 55, der zwischen den beiden Führungsstiften 57, 58 eingespannt wird. Beim Verschwenken der Kurbel 54 durch die Verstellvorrichtung 51, 52 wird die Bewegung des Zapfens 55 auf die Spiegelträgerplatte 18 und damit auf den Spiegel 13 übertragen, der dabei um eine horizontale, durch die Drehpunkte der Kugelgelenke 14 bis 17 gehende Achse, gekippt wird.

Sowohl zwischen der Kurbel 32 und dem Getriebe 31 der ersten Stelleinheit, wie auch zwischen dem Schwenkhebel 54 und dem Getriebe 52 der zweiten Stelleinheit ist jeweils eine Rutschkupplung angeordnet, die es erlaubt, den Spiegel 13 von Hand zu verstellen, so daß einmal eine Grundeinstellung des Spiegels von Hand vorgenommen werden kann, indem an den Seiten der Spiegelplatte auf den Spiegel ein entsprechender Druck ausgeübt wird, zum andern kann auch bei Ausfall einer oder beider Stelleinheiten der Spiegel noch von Hand eingestellt werden.

Für die Kurbeln 32 und 54 sind Anschläge vorgesehen, die die Schwenkbewegung der Kurbeln begrenzen. Wenn sich eine der Kurbeln an ihren Anschlag bewegt hat, tritt die jeweilige Rutschkupplung in Tätigkeit und läßt den Elektromotor leer durchdrehen, so daß dieser nicht überlastet werden kann.

Beide Elektromotoren sind durch elektrische Zuleitungen 60 und 61, die über eine Öffnung 62 in dem Spiegelgehäuse und durch den Spiegelfuß 12 in das Fahrzeuginnere geführt sind, mit einem nicht dargestellten Betätigungsschalter in Reichweite des Fahrers verbunden, so daß der Fahrer den Rückblickspiegel von seinem Platz aus verstellen kann.

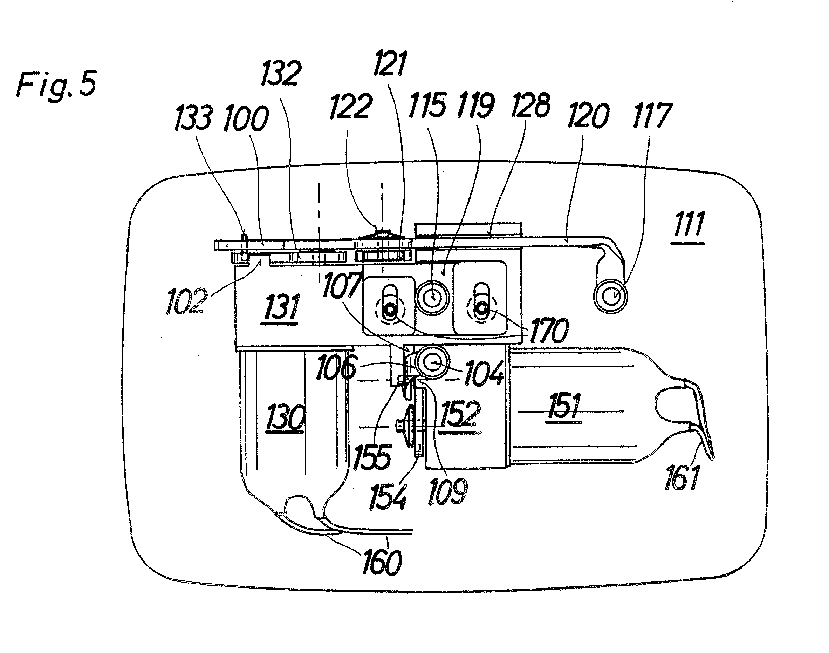

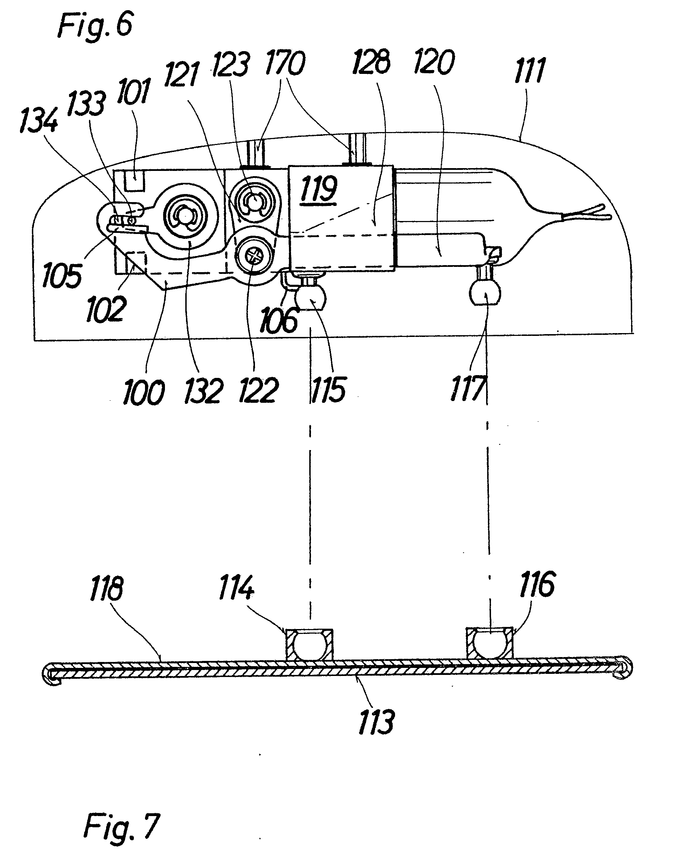

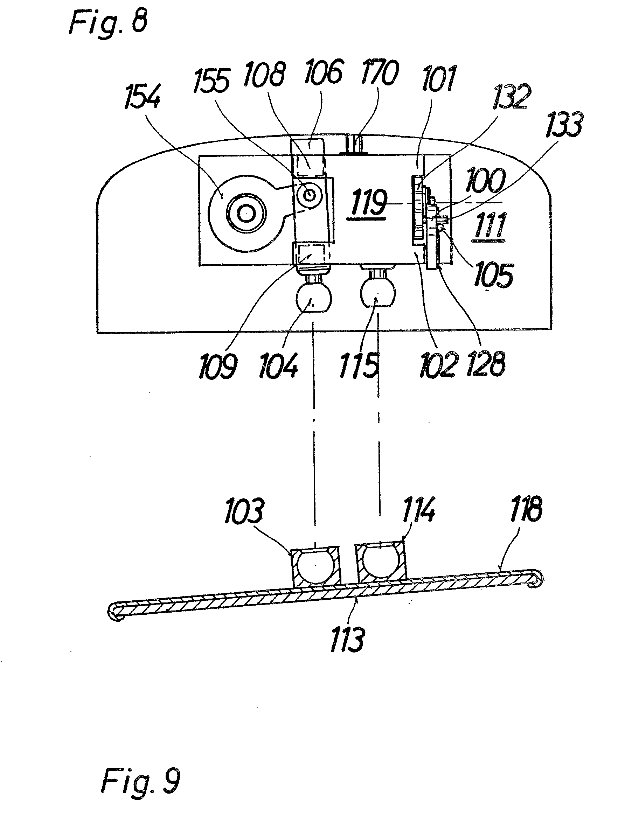

Bei dem zweiten Ausführungsbeispiel eines Rückblickspiegels, das in den Fig. 5 bis 9 dargestellt ist, ist eine Dreipunktaufhängung der Spiegelplatte verwirklicht, wobei der zweite und dritte Aufhängungspunkt gleichzeitig als Angriffspunkt für die beiden Stellvorrichtungen 130, 131 bzw. 151, 152 dient. Der erste Aufhängungspunkt für die Spiegelplatte 118 ist durch das Kugelgelenk 114, 115 gegeben, bei dem das Vaterteil 115 starr an der Aufnahme 119 für die Stelleinheit 130, 131 bzw. 151, 152 befestigt ist, die ihrerseits durch Stehbolzen 170 mit dem Spiegelgehäuse 111 verbunden ist. Das Mutterteil 114 dieses ersten Kugelgelenks ist an der Rückseite der Spiegelplatte 118 angebracht.

Der zweite Aufhängungspunkt wird von dem Kugelgelenk 116, 117 gebildet, von dem das Vaterteil 117 an einem an seinem Ende abgewinkelten Arm 120 angebracht ist, der als Hebel ausgebildet und mittels eines Drehlagers 122 an einem Ausleger 121 drehbar gelagert ist. Der Ausleger 121 ist seinerseits mittels eines weiteren Drehlagers 123 schwenkbar an der Aufnahme 119 befestigt. Der als Hebel ausgebildete Arm 120 weist an seinem anderen Ende 100 einen ungefähr in Längserstreckung des Arms 120 verlaufenden Einschnitt 134 auf, in den der Zapfen 133 eines Kurbelarms 132 eingreift, der über eine zwischengeschaltete Rutschkupplung von der Stellvorrichtung 130, 131 von Anschlag zu Anschlag 101 bzw. 102 verschwenkt werden kann. Der Zapfen 133 wird dabei durch ein Federelement 105 in ständiger Anlage an einer Seite des Einschnitts 134 gehalten, um vorhandenes Spiel auszugleichen. Die Bewegung der Kurbel wird mittels des Armes 120 auf den zweiten Aufhängungspunkt 116, 117 übertragen, wodurch die Spiegelplatte 118 um eine im wesentlichen vertikale Achse verschwenkt wird.

Die zwischen die Antriebsachse der Stellvorrichtung 131 und den Kurbelarm 132 geschaltete Rutschkupplung ist bezüglich ihrer Drehmoment-Übertragung so ausgelegt, daß der Antriebsmotor 130 sich einerseits weiterdreht, wenn der Kurbelarm 132 an einen seiner Anschläge 101, 102 gekommen ist, andererseits jedoch ein solches Drehmoment übertragen wird, daß die Reibung, die der Arm 120 in der in der Aufnahme 119 ausgebildeten Schlitzführung 128 erfährt, mit Sicherheit überwunden wird.

Die durch die Schlitzführung 128 auf den Hebelarm 120 ausgeübte Reibung ist so bemessen, daß das durch die Beschleunigung des Spiegelglases unter Spiegelträgerplatte 118 auf das Kugelgelenk 116, 117 ausgeübte Drehmoment auf keinen Fall ausreicht, den Arm 120 in der Schlitzführung 128 zu verschieben, so daß eine quasistarre Verbindung des Kugelgelenks 116, 117 und damit des zweiten Aufhängungspunktes mit dem Spiegelgehäuse 111 gegeben ist. Um eine Reibung der erforderlichen Größe zu erzeugen, ist der in der aus Kunststoff bestehenden Aufnahme ausgebildete Schlitz auf Paßsitz mit dem aus Flachmaterial hergestellten Arm 120 gearbeitet. Anstelle der in der Aufnahme 119 ausgebildeten Schlitzführung kann jedoch auch eine auf den Arm 120 drückende Reib- und Führungsfläche vorgesehen werden, deren Spannung ein- und nachstellbar ist.

Anstelle der Anlenkung des Armes 120 mittels eines Auslegers 121 an der Aufnahme 119 kann in dem Arm etwa in Höhe des Lagers 122 ein Langloch vorgesehen werden, durch das ein fest an der Aufnahme 119 angebrachter Führungszapfen greift.

Durch Anordnung einer Rutschkupplung zwischen der Antriebswelle der Stelleinheit 131 und dem Kurbelarm 132 ist sichergestellt, daß bei Ausfall der Stelleinheit 130, 131 die Spiegelplatte 118 von Hand verstellt werden kann, indem neben dem ersten Aufhängungspunkt 114, 115 von Hand ein entsprechender Druck auf die Spiegelplatte 113, 118 ausgeübt wird.

Der dritte, bei diesem Ausführungsbeispiel eines Rückblickspiegels vorgesehene Aufhängungspunkt für die Spiegelplatte wird durch ein drittes Kugelgelenk 103, 104 gebildet (vgl. Fig. 8, bei der die elektrische Antriebseinheit nicht eingezeichnet ist). Der dritte Aufhängungspunkt ist gleichzeitig Angriffspunkt für die zweite Stellvorrichtung 151, 152, die die Verkippung der Spiegelplatte 113, 118 um die in der Verbindungslinie der Kugelgelenke 114, 115 bzw. 116, 117 liegende horizontale Achse bewirkt. Hierzu ist das Vaterteil 104 des dritten Kugelgelenks an einem abgewinkelten Arm 106 befestigt, der in einer weiteren, in der Aufnahme 119 ausgebildeten Schlitzführung 107 gelagert und geführt ist. Die Schlitzführung 107 weist im Schwenkbereich der Kurbel 154 einen Ausschnitt auf, gleichzeitig sind im aufnahmeseitigen Teil dieser Schlitzführung 107 Anschläge 108 und 109 ausgebildet, die die Schwenkbewegung der Kurbel 154, die über eine weitere Rutschkupplung mit der zweiten Stellvorrichtung 151, 152 drehfest verbunden ist, begrenzen.

Die Kurbel 154 trägt ah ihrem freien Ende einen Kurbelzapfen 155, der in eine Bohrung in dem Arm 106 greift, so daß sich eine Schwenkbewegung der Kurbel 154 über den Arm 106 und das dritte Kugelgelenk 103, 104 auf die Spiegelplatte überträgt.

Der Arm 106 ist in der Schlitzführung 107 wiederum unter Reibung derart gelagert, daß einmal ein Verkippen des Armes unmöglich ist und zum anderen der Arm in seiner Führung durch von dem Spiegelglas und der Spiegelträgerplatte ausgehende Kräfte nicht verschoben werden kann, weil diese zu klein sind, um die Haftreibung des Armes 106 in der Schlitzführung 107 zu überwinden, so daß auch in diesem Fall eine quasistarre Verbindung des dritten Aufhängungspunktes mit dem Spiegelgehäuse 111 gegeben ist.

Andererseits ist die Drehmomentübertragung der Rutschkupplung der zweiten Stellvorrichtung so ausgelegt, daß bei deren Betätigung mit Sicherheit die Reibung des Armes 106 in der Schlitzführung 107 überwunden wird. Im übrigen sorgt auch diese Rutschkupplung dafür, daß bei Ausfall der Stellvorrichtung 151, 152 die Spiegelplatte noch von Hand verstellt werden kann und außerdem eine Überlastung der elektrischen Antriebseinheit 151 vermieden wird, wenn sich die Kurbel 154 an einem ihrer Anschläge 108 bzw. 109 befindet.

Die Kuegelgelenke 103 104; 114, 115 und 116, 117 bilden die Eckpunkte eines rechtwinkligen Dreiecks mit dem rechten Winkel bei dem ortsfesten Kugelgelenk 114, 115. Durch diese Maßnahme wird erreicht, daß die Stellvorrichtung 130, 131 ausschließlich eine Verkippung der Spiegelplatte um eine in die Verbindungslinie der Kugelgelenke 103, 104 bzw. 114, 115 fallende vertikale Achse bewirkt, während die Stellvorrichtung 151, 152 ausschließlich eine Kippung der Spiegelplatte 118 um die Verbindungslinie der Kugelgelenke 114, 115 bzw. 116, 117 verursacht, ohne daß die Kippstellung in der jeweils anderen Achse beeinflußt wird.

## Patentansprüche

1. Fernbedienbare Ein- oder Verstellvorrichtung bei Rückblickspiegeln von Fahrzeugen od. dgl., mit mindestens einer in einem Spiegelgehäuse (11; 111) untergebrachten, von einer entfernten Stelle aus steuerbaren Stellvorrichtung (30, 31, 51, 52; 130, 131, 151, 152), einer schwenkbaren, mittels Aufhängungen spielfrei in dem Spiegelgehäuse gelagerten Spiegelplatte (13; 113), wobei eine (14, 15; 114, 115) der an der Spiegelplattenrückseite angreifenden Aufhängungen ortsfest und mit dem Spiegelgehäuse starr verbunden ist, während die weitere oder weiteren Aufhängungen der Spiegelplatte als Übertragungselemente der Stellvorrichtung und gegenüber dem Spiegelgehäuse bewegbar ausgebildet sind, dadurch gekennzeichnet, daß die gegenüber dem Spiegelgehäuse (11; 111) bewegbaren, an der Spiegelplatte (13, 18; 113, 118) angreifenden Aufhängungen (16, 17, 20—23; 25, 26; 103, 104, 106; 116, 117, 120) in dem Spiegelgehäuse (11; 111) derart unter Reibung zwangsgeführt sind, daß eine quasistarre Verbindung zwischen dem Spiegelgehäuse (11; 111) und der Spiegelplatte (13, 18; 113, 118) gegeben ist.

2. Fernbedienbare Ein- oder Verstellvorrichtung nach Anspruch 1, dadurch gekennzeichnet, daß die Zwangsführung (27, 28, 28'; 107; 128) in unmittelbarer Nähe der Spiegelplatte (13, 18; 113, 118) an der zugehörigen Aufhängung (16, 17, 20—23; 25, 26; 103, 104, 106; 116, 117, 120) angreift.

3. Fernbedienbare Ein- oder Verstellvorrichtung nach Anspruch 1 und/oder 2, dadurch gekennzeichnet, daß die durch die Zwangsführung (107; 128) auf die Aufhängung (103, 104, 106; 116, 117, 120) der Spiegelplatte (113, 118) wirkende Reibungskraft größer ist als die im Fahrbetrieb auf die Spiegelplatte und ihre Aufhängung einwirkenden Beschleunigungskräfte.

4. Fernbedienbare Ein- oder Verstellvorrichtung nach mindestens einem der vorangegangenen Ansprüche, dadurch gekennzeichnet, daß die Zwangsführung (27, 28, 28'; 107; 128) also Schlitzführung ausgebildet ist.

5. Fernbedienbare Ein- oder Verstellvorrichtung nach mindestens einem der vorangegangenen Ansprüche, dadurch gekennzeichnet, daß mindestens eine Fläche der Schlitzfürung (107; 128) federnd auf dem Arm (1)6 bzw. 120) aufliegt.

**0 001 052**

6. Fernbedienbare Ein- oder Verstellvorrichtung nach mindestens einem der vorangegangenen Ansprüche, dadurch gekennzeichnet, daß der Arm (20; 120) an einem mit dem Spiegelgehäuse (11; 111) drehbeweglich verbundenen Ausleger (21; 121) angelenkt ist.

7. Fernbedienbare Ein- oder Verstellvorrichtung nach mindestens einem der vorangegangenen Ansprüche, dadurch gekennzeichnet, daß der Arm (20; 120) ein Langloch aufweist, durch das ein mit dem Spiegelgehäuse fest verbundener Führungsstift greift.

**Claims**

1. Remotely-operable settable or adjustable device for rear-view mirrors of vehicles or the like, with at least one adjusting means operable from a remote location (30, 31, 51, 52; 130, 131, 151, 152) located in a mirror housing (11; 111), a displaceable mirror plate (13, 113) mounted without play in the mirror housing by means of suspension members, so that one (14, 15; 114, 115) of the suspension member which acts on the back of the mirror plate is fixed and rigidly connected to the mirror housing, while the further suspension member or members for the mirror plate are formed as transfer elements of the adjusting means and are displaceable relative to the mirror housing, characterised in that the suspension members (16, 17, 20—23; 25, 26; 103, 104, 106; 116, 117, 120) which are displaceable relative to the mirror housing and act on the mirror plate (13, 18; 113, 118) are frictionally controlled and guided in the mirror housing in such a way that a quasi-rigid connection between the mirror housing (11; 111) and the mirror plate (13, 18; 113, 118) is given.

2. Remotely-operable settable or adjustable device according to Claim 1, characterised in that the control guide (27, 28, 28'; 197, 128) acts in the immediate vicinity of the mirror plate (13, 18; 113, 118) on the corresponding suspension member (16, 17, 20—23; 25, 26; 103, 104, 106; 116, 117, 120).

3. Remotely-operable settable or adjustable device according to Claim 1 and/or 2, characterised in that the frictional force acting on the suspension member (103, 104, 106; 116, 117, 120) of the mirror plate (113, 118) through the control guide (107; 128) is greater than the accelerative forces acting on the mirror plate and its suspension during use.

4. Remotely-operable settable or adjustable device according to at least one of the preceding claims, characterised in that the control guide (27, 28, 28'; 107; 128) is formed as a guide slot.

5. Remotely-operable settable or adjustable device according to at least one of the preceding claims, characterised in that at least one surface of the guide slot (107; 128) is flexibly mounted on the bracket (106 or 120).

6. Remotely-operable settable or adjustable device according to at least one of the preceding claims, characterised in that the bracket (20; 120) is articulated to an arm (21; 121) pivotally connected to the mirror housing (11; 111).

7. Remotely-operable settable or adjustable device according to at least one of the preceding claims, characterised in that the bracket (20; 120) displays a slot, in which engages a guide pin rigidly connected to the mirror housing.

**Revendications**

1. Dispositif de réglage ou d'orientation télécommandé pour des rétroviseurs de véhicules ou analogues, comportant au moins un dispositif de réglage (30, 31, 51, 52; 130, 131, 151, 152) logé dans le boîtier du miroir (11, 111), commandé à partir d'un endroit éloigné, un miroir (13, 113) pivotant monté sans jeu dans le boîtier de miroir au moyen de suspensions, l'une (14, 15; 114, 115) des suspensions fixée au côté arrière du miroir étant reliée rigidement in situ au boîtier du miroir, tandis que l'autre suspension, ou d'autres suspensions du miroir sont réalisées en tant qu'éléments de transmission du dispositif de réglage et sont mobiles par rapport au boîtier du miroir, caractérisé en ce que les suspensions (16, 17; 20—23; 25, 26; 103, 104, 106; 116, 117, 120), fixées sur la plaque support de miroir (18; 118) et mobiles par rapport au boîtier de miroir (11; 111), sont guidées positivement (par force) avec frottement dans le boîtier de miroir (11; 111), de telle sorte qu'il en résulte une liaison quasi-rigide entre le boîtier de miroir (11; 111) et la plaque support de miroir (18; 118).

2. Dispositif de réglage ou d'orientation selon la revendication 1, caractérisé en ce que le guidage forcé (27, 28, 28'; 107; 128) attaque la suspension correspondante (16, 17, 20—23; 25, 26; 103, 104, 106; 116, 117, 120) au voisinage immédat de la plaque support de miroir (18; 118).

3. Dispositif de réglage ou d'orientation selon la revendication 1 et/ou la revendication 2, caractérisé en ce que la force de frottement exercée pa le guidage forcé (107; 128) sur la suspension (103, 104, 106; 116, 117, 120) de la plaque support de miroir (118) est plus grande que les forces d'accélération agissant, pendant la marche, sur la plaque support de miroir et sa suspension.

4. Dispositif de réglage ou d'orientation selon l'une quelconque des revendications précédentes, caractérisé en ce que le guidage forcé (27, 28, 28'; 107; 128) est réalisé sous forme de guidage á fente.

5. Dispositif de réglage ou d'orientation selon l'une quelconque des revendications précédentes, caractérisé en ce qu'au moins une surface du guidage à fente (107, 128) repose élastiquement sur le bras (106, 120).

6. Dispositif de réglage ou d'orientation selon l'une quelconque des revendications précédentes, caractérisé en ce que les bras (20; 120) est articulé sur un bras (21; 121) relié, mobile en rotation, avec le boîtier de miroir (11; 111).

7. Dispositif de réglage ou d'orientation selon l'une quelconque des revendications précédentes, caractérisé en ce que le bras (20; 120) comporte un trou allongé par lequel passe un doigt de guidage solidaire du boîtier de miroir.

**FIG. 1**

0 001 052

**FIG. 2**

FIG.3

10

FIG.4

2

Fig. 5

Fig. 6

Fig. 7

Fig. 8

Fig. 9